# EUROPÄISCHE PATENTANMELDUNG

(11) **EP 2 105 282 A2**
(43) Veröffentlichungstag der Anmeldung: **30.09.2009**
(21) Anmeldenummer: 09004215.1
(22) Anmeldetag: 25.03.2009
(51) Int. Cl.: B29C 65/20

(54) **Vorrichtung und Verfahren zur Verbindung von Profilteilen eines Fenster- oder Türrahmens**

(30) Priorität: 25.03.2008 DE 102008015663
(71) Anmelder: ROTOX Besitz- und Verwaltungsgesellschaft mbH, 65611 Brechen (DE)
(72) Erfinder: Schmitt, Hans, 66877 Rammstein (DE)
(74) Vertreter: Müller, Eckhard

(57) **Zusammenfassung**

Es handelt sich um eine Vorrichtung zum Verbinden von Kunststoffprofilteilen (10, 12; 14, 16, 18, 26, 28, 30, 32, 34, 36, 38 , 40, 42, 44, 46, 48, 50) eines Fenster-oder Türrahmens, welcher zumindest zwei durch einen Querholm (18, 50) oder durch einen in Längsrichtung verlaufenden Steg getrennte Öffnungen (60, 62, 64, 66) für gegensinnig zu öffnende Flügel des Fensters oder der Tür aufweist, wobei der an seinen freien Enden zumindest spitz zulaufende Querholm oder Steg (18, 50) zwei Rahmenteile (20, 22) miteinander verbindet, welche jeweils zwei Profilteile (10, 12, 14, 16) unterschiedlichen Querschnittprofils aufweisen. Die Vorrichtung weist zumindest ein Schweißmodul (71) zum Anschmelzen von im Fügezustand aneinander angrenzenden Begrenzungsflächen der Profilteile (10, 12; 14, 16, 18, 26, 28, 30, 32, 34, 36, 38, 40, 42, 44, 46, 48, 50) aufweist, wobei das Schweißmodul (71) einen ersten Schweißspiegel (70) mit einer plattenartigen Kontur und einen zweiten Schweißspiegel (72) mit einer V-förmigen Kontur aufweist und die beiden Schweißspiegel (70, 72) relativ zueinander beweglich an der Vorrichtung angeordnet sind. Dabei ist es vorgesehen, dass der erste und zweite Schweißspiegel (70, 72) gemeinsam zur Herstellung einer Y-artigen Schweißnaht der im Fügezustand aneinandergrenzenden Begrenzungsflächen dreier Profilteile (10, 12; 14, 16, 18, 26, 28, 30, 32, 34, 36, 38, 40, 42, 44, 46, 48, 50) ausgebildet ist und in einem ersten Schweißakt der erste Schweißspiegel (70) und in einem zweiten Schweißakt der zweite Schweißspiegel (72) zur Anlage an Begrenzungsflächen der Profilteile (10, 12; 14, 16, 18, 26, 28, 30, 32, 34, 36, 38, 40, 42, 44, 46, 48, 50) gelangt (Figur 7).

## Beschreibung

### Beschreibung

Die vorliegende Erfindung betrifft eine Vorrichtung zum Verbinden von Kunststoff-Profilteilen eines Fenster- oder Türrahmens nach dem Oberbegriff des Anspruchs 1 und ein entsprechendes Schweißverfahren zur Herstellung von Fenster- oder Türrahmen, welche durch Querholmen voneinander getrennte Öffnungen für gegensinnig zu öffnende Flügel des Tür- oder Fensterrahmens aufweisen, nach dem Oberbegriff des Anspruchs 10.

### Stand der Technik

Das Verbinden von Kunststoff-Profilteilen zu einem Fenster- oder Türrahmen, an welchem bewegliche Flügel mit Fensterscheiben schwenkbar gelagert sind, ist aus dem Stand der Technik an sich bekannt. Das Zusammenfügen einzelner Profilteile zur Bildung eines Fensterrahmens erfolgt mittels geeigneter Heizelemente, wie etwa Heizplatten oder Schweißspiegel. An deren gegenüberliegenden beheizbaren Flächen werden die miteinander zusammenzufügenden Profilteile mit ihrer Stirnseite zum Erwärmen in Anlagestellung gebracht. Sobald die miteinander zu verbindenden Bereiche der Profilteile auf eine vorgegebene Schmelztemperatur erwärmt sind, wird der zwischen den Teilen angeordnete Schweißspiegel entfernt, die Teile werden mit ihren angeschmolzenen Partien aneinandergedrückt, und durch das anschließende Erkalten, Aushärten und/oder Abkühlen dieser angeschmolzenen Bereiche wird eine feste Verbindung zwischen den Profilteilen geschaffen.

Bei Fenster- oder Türrahmen, an denen zumindest zwei Flügel mit gegensinniger Öffnung schwenkbar anzuordnen sind, gestaltet sich das Zusammenfügen einzelner Profilteile zu einem entsprechenden Rahmen als relativ komplex und aufwendig, da die den Rahmenausschnitt bildenden Profilteile der vorgesehenen Öffnungsrichtung des Fenster- oder Türflügels entsprechend angepasst sein müssen. Sind beispielsweise zwei für gegensinnig zu öffnende Flügel vorgesehene Rahmenöffnungen durch einen Querholm oder Quersteg voneinander getrennt, so müssen diejenigen Rahmenteile, die über den Querholm oder den Quersteg miteinander verbunden sind, über ihre Profillängsrichtung gesehen, einen an die jeweilige Öffnungsrichtung angepassten Profilquerschnitt aufweisen.

Fertigungstechnisch bedeutet dies, dass die mittels eines Querholms oder Quersteg zu verbindenden Rahmenteile selbst zwei zuvor zusammengefügte Profilteile unterschiedlichen Profilquerschnitts aufweisen. Der Querholm oder Quersteg ist schließlich im Stoßbereich der beiden Profilteile des Rahmenteils mit dem Rahmenteil zu verbinden.

Eine Vorrichtung sowie ein Verfahren mit den eingangs genannten Merkmalen ist bereits aus der DE 7108276 U bekannt. Diese Rahmenschweißmaschine weist vier Spanneinrichtungen für Kunststoffprofile auf, wobei die Spanneinrichtungen rechtwinklig zueinander vorgesehen sind, und von denen zwei einander gegenüberliegende Spanneinrichtungen durch eine Antriebsvorrichtung zur Durchführung des Schweißvorganges aufeinander zu bewegbar sind. An den Schweißstellen sind zugeordnete Schweißspiegel angeordnet, die aus der Schweißstelle heraus bewegbar sind. Zwei einander gegenüberliegende Spanneinrichtungen für den Schweißvorgang sind stationär angeordnet, wobei vorzugsweise zwischen diesen Spanneinrichtungen wenigstens eine zu ihnen parallele zusätzliche Spanneinrichtung ebenfalls stationär angeordnet ist, deren Enden zusätzliche Schweißspiegel zugeordnet sind. Insbesondere ist in dieser Druckschrift eine Vorrichtung zum Verbinden von Kunststoffteilen offenbart, wobei die Vorrichtung einen ersten Schweißspiegel mit einer plattenartigen Kontur und zumindest einem zweiten Schweißspiegel mit einer V-förmigen Kontur aufweist. Die beiden Schweißspiegel sind relativ zueinander beweglich an der Vorrichtung angeordnet, indem diese Schweißspiegel unter Zusammendrücken einer Feder einer Bewegung folgen können.

In der DE 202 06 377 U1 ist ferner eine Vorrichtung zum Verbinden eines Querholms mit einem Rahmenteil beschrieben, wobei der Querholm mit dachförmigen Stirnseiten versehen ist, deren Spitzen nicht mit den Seiten des Querholmes fluchten. Zur Verbindung von sowohl zweier ein Rahmenteil bildenden Profilteilen und dem Querholm sind ein in Y-Form ausgebildeter Schweißspiegel und Verfahreinrichtungen zum Verfahren beider Profilteile aufeinander sowie der Profilteile und des Querholms relativ zueinander vorgesehen.

Der Y-förmige Schweißspiegel ist dabei einstückig ausgebildet. Dies erfordert, dass alle drei miteinander zu verschweißenden Profilteile gleichzeitig an dem in Y-Form ausgebildeten Schweißspiegel zu erwärmen sind. Nach einer ausreichenden Erwärmung können die das Rahmenteil bildenden Profilteile zunächst gegeneinander und anschließend gemeinsam gegen den Querholm verschoben werden. Bevorzugt ist aber vorgesehen, sämtliche angeschmolzenen Rahmenteile gleichzeitig und schräg zu ihrer Erstreckungsrichtung gegeneinander und gegen den Holm zu verschieben. Dabei erfolgt die Verfahrbewegung der beiden das Rahmenteil bildenden Profilteile in einer überlagerten Bewegung schräg zu ihrer Erstreckungsrichtung.

Zwar ist eine derartige Vorrichtung zur Schaffung einer einzigen Eckverbindung, bestehend aus zwei Profilteilen unterschiedlichen Profilquerschnitts und einem etwa senkrecht dazu verlaufenden Querholm geeignet. Problematisch bleibt jedoch die weitere Verarbeitung eines solchen mit einem Querholm versehenen Rahmenteils zur Bildung eines Fenster- oder Türrahmens.

Zwar können mittels einer in der DE 202 06 377 U1 beschriebenen Vorrichtung vorkonfektionierte Rahmenkomponenten, etwa mit einer H-artigen Außenkontur hergestellt werden. Eine weitere Verarbeitung solch vorkonfektionierter Rahmenkomponenten ist mit einer solchen Vorrichtung jedoch nur bedingt möglich. Sollen etwa die beiden freien Enden der H-artigen Rahmenkomponente mit weiteren, insbesondere mit parallel zum Querholm verlaufenden Profilteilen verbunden werden, so tritt das Problem auf, dass aufgrund der starren Verbindung der beiden Rahmenteile der H-artigen Komponente über den Querholm eine Relativbewegung der Rahmenteile zueinander nicht mehr möglich ist.

Ein Anschweißen weiterer Profilteile an die freien Enden der H-artig ausgestalteten Rahmenkomponente erzwingt eine Relativbewegung der H-Komponente und des weiteren Profilteils im Wesentlichen senkrecht zur Erstreckung des Querholms. Mit einer derartigen Einschränkung kann jedoch die aus der DE 202 06 377 U1 beschriebene Schweißvorrichtung mit einem einstückigen Y-förmigen Schweißspiegel nicht betrieben werden. Denn eine derartige Verschweißung erfordert stets eine Relativverschiebung der zu verbindenden Profilteile in zwei unterschiedliche Bewegungsrichtungen.

Die Herstellung von Fenster- oder Türrahmen mit Rahmenöffnungen für gegensinnig zu öffnende Flügel erfordert nach dem Stand der Technik entweder ein ständiges Umrüsten oder Umkonfektionieren einer Schweißvorrichtung oder die Verwendung einer Vielzahl unterschiedlich konfektionierter oder entsprechend ausgestatteter Schweißvorrichtungen verbunden mit einem Transport vorkonfektionierter Rahmenkomponenten und Rahmenteile.

### Aufgabe

Der vorliegenden Erfindung liegt demgegenüber die Aufgabe zugrunde, eine Vorrichtung zum Verbinden von Kunststoff-Profilteilen eines eingangs beschriebenen Fenster- oder Türrahmens zur Verfügung zu stellen, die einfach in der Handhabung und universell für eine Vielzahl zu schaffender Eckverbindungen verwendbar ist. Ferner ist es Ziel der Erfindung, ein Verfahren zum Verbinden und Zusammenfügen einer Vielzahl von Kunststoff-Profilteilen zu einem eingangs beschriebenen Fenster- oder Türrahmen zur Verfügung zu stellen, welches besonders fertigungsrationell ist, und welches mit einer Verringerung der Gesamtfertigungszeit für einen Fenster- oder Türrahmen einhergeht.

Erfindung und vorteilhafte Wirkungen

Die der Erfindung zugrundeliegende Aufgabe wird mittels einer Vorrichtung zum Verbinden von Kunststoff-Profilteilen gemäß Patentanspruch 1 und einem entsprechenden Verfahren gemäß Patentanspruch 10 gelöst. Weitere vorteilhafte Ausführungen der Erfindung sind in den jeweiligen Unteransprüchen angegeben.

Die erfindungsgemäße Vorrichtung ist zum Verbinden von einzelnen Kunststoff-Profilteilen eines Fenster- oder Türrahmens vorgesehen, wobei der Fenster- oder Türrahmen zumindest zwei durch einen Querholm oder durch einen länglich verlaufenden Steg getrennte Öffnungen für gegensinnig zu öffnende Flügel des Fensters oder der Tür aufweist. Anstelle zweier gegensinnig zu öffnender Flügel kann der Rahmen auch zwei neben- oder übereinander angeordnete Rahmensegmente aufweisen, von denen eines für einen nach außen zu öffnenden Flügel vorgesehen ist, während das andere Segment als fest verglastes Segment ausgebildet ist, an welchem kein Flügel gelagert ist.

Der in Querrichtung verlaufende Querholm oder ein in Längsrichtung verlaufender Trennsteg weisen spitz zulaufende freie Enden auf, die zwei durch den Querholm oder den Steg voneinander beabstandete Rahmenteile miteinander verbinden. Diese Rahmenteile weisen jeweils zumindest zwei Profilteile unterschiedlichen Querschnitts auf, wobei jedes Querschnittsprofil an die jeweilige Öffnung für den Fenster- oder Türflügel ausgebildet ist. Die zumindest beiden Profilteile können auch im Wesentlichen gleiche Profilquerschnitte aufweisen. Sie sind dabei dann aber zueinander gedreht oder gespiegelt angeordnet. Bezogen auf die Längserstreckung des Rahmenteils ist das Querschnittsprofil eines Profilteils durch Spiegelung oder Drehung in das Querschnittsprofil des jeweils anderen Profilteils überführbar. Die erfindungsgemäße Vorrichtung weist zumindest ein Schweißmodul oder eine Schweißstation zum Abschmelzen von im Fügezustand aneinander angrenzenden Begrenzungsflächen der Profilteile auf. Das Schweißmodul hat zumindest einen ersten Schweißspiegel mit einer geradlinigen oder plattenartigen Kontur und zumindest einen zweiten Schweißspiegel mit einer V-förmigen Außenkontur. Die beiden unterschiedlich ausgestalteten Schweißspiegel oder die beiden unterschiedlich ausgestalteten Komponenten eines gemeinsamen Schweißspiegels sind relativ zueinander beweglich an der Vorrichtung bzw. an dem Schweißmodul angeordnet, wobei der erste und zweite Schweißspiegel gemeinsam zur Herstellung einer Y-artigen Schweißnaht der im Fügezustand aneinandergrenzenden Begrenzungsflächen dreier Profilteile dienen und in einem ersten Schweißakt der erste Schweißspiegel und in einem zweiten Schweißakt der zweite Schweißspiegel zur Anlage an Begrenzungsflächen der Profilteile gelangt.

Die Erfindung stellt somit ein universell verwendbares und konfigurierbares Schweißmodul mit zwei unterschiedlich ausgestalteten Schweißspiegeln bzw. Schweißmodulkomponenten zur Verfügung, welche in vorteilhafter Weise zum zeitlich sequenziellen Zusammenfügen einzelner Profilteile zur Bildung zumindest einer Eckverbindung des Fenster- oder Türrahmens ausgebildet sind. Insbesondere ist vorgesehen, mittels dieses zweikomponentigen Schweißmoduls ein Y-artige Schweißverbindung dreier Profilteile herzustellen, wobei der plattenartig ausgebildete erste Schweißspiegel zur Bildung zum Zusammenfügen eines zwei Profilteile aufweisenden Rahmenteils vorgesehen ist. Die beiden Profilteile haben dabei vorzugsweise einen solchen ursprünglichen Zuschnitt, so dass die mittels des ersten, eben ausgebildeten Heizspiegels aufzuschmelzende Stirnfläche einen Teilbereich des Gesamtquerschnittprofils des Profilteils beträgt. Dabei bleibt nach einem Zusammenfügen der beiden Stirnflächen der Profilteile zu einem Rahmenteil senkrecht zur Schweißnaht ein V-förmiger Ausschnitt im Rahmenteil erhalten. Dieser V-förmige Ausschnitt wird anschließend unter Verwendung der außenliegenden Heizflächen des V-förmigen zweiten Heizspiegels erwärmt, dessen Innenflächen gleichzeitig das spitz zulaufende freie Ende des Querholms abschmelzen. Nach diesem nachgeschalteten zweiten Aufheizvorgang ist der Querholm mit seinem spitz zulaufenden Endabschnitt in die V-förmige Ausnehmung des Rahmenteils einsetzbar und bildet nach einem Erstarren bzw. Abkühlen der aufgeschmolzenen Bereiche eine feste Verbindung mit dem Rahmenteil. Dadurch, dass das erfindungsgemäße Schweißmodul mit einem ersten plattenartigen Heizelement, Heizplatte oder Schweißspiegel und einem zweiten V-förmigen Heizelement, Heizplatte oder Schweißspiegel konfigurierbar ausgestattet ist, kann die Vorrichtung und ihr Schweißmodul auch für nachfolgende Schweißvorgänge, bei welchen weitere Profilteile mit einem vorkonfektionierten Rahmenteil oder einer Rahmenkomponente verbunden bzw. verschweißt werden universell Verwendung finden. Auf den Einsatz weiterer, anders gearteter Schweißmodule zur Fertigstellung eines Fenster- oder Türrahmens kann daher in vorteilhafter Weise verzichtet werden. Anstelle einer Vielzahl unterschiedlich konfigurierter Schweißvorrichtungen können nun sämtliche zur Herstellung des Fenster- oder Türrahmens erforderlichen Schweißvorgänge mit Hilfe einer einzigen Schweißvorrichtung durchgeführt werden.

Nach einer ersten vorteilhaften Weiterbildung der Erfindung ist zumindest einer der beiden, vorzugsweise sind aber beide Schweißspiegel des Schweißmoduls entweder vertikal, horizontal und/oder schräg zu einer Aufspannebene der Profilteile verstellbar an der Vorrichtung angeordnet. Es ist insbesondere vorgesehen, in einem ersten Schweißtakt lediglich den ersten Schweißspiegel mit den zu verscheißenden Profilteilen in Anlagestellung zu bringen und in einem zweiten Schweißtakt ausschließlich den zweiten, V-förmigen Schweißspiegel mit den miteinander zu verschweißenden Profilteilen oder Rahmenteile zur Anlage zu bringen. Beide Schweißspiegel sind vorzugsweise unabhängig voneinander beweglich bzw. verstellbar an der Vorrichtung angeordnet. Sie können dabei mechanisch voneinander entkoppelt sein.

Alternativ kann auch vorgesehen werden, die beiden Schweißspiegel mechanisch in einer solchen Art und Weise zu koppeln, dass eine Schwenk- oder Verfahrbewegung eins Schweißspiegels in eine gegenläufige Schwenk- oder Verfahrbewegung des anderen Schweißspiegels umgesetzt wird. Demnach kommt stets einer der beiden Schweißspiegel in der Aufspannebene der Profilteile zu liegen, während sich der andere Schweißspiegel in einer Ruhestellung befindet.

Anders als im Stand der Technik üblich, ist die erfindungsgemäße Vorrichtung insbesondere dazu ausgelegt, eine Y-artige Schweißverbindung in zwei Schritten herzustellen, wobei in einem ersten Schritt zwei der drei zur Bildung der Y-Verbindung vorgesehenen Profilteile erwärmt, angeschmolzen und zusammengefügt werden und in einem nachfolgenden Zyklus das bereits zusammengefügte zweikomponentige Rahmenteil und das verbliebene dritte Profilteil erwärmt, angeschmolzen und anschließend zusammengefügt werden. Auf den ersten Blick vermag diese sequenzielle und zweitaktige Bildung einer Y-Verschweißung gegenüber einer aus der DE 202 06 377 U1 bekannten integrativen Verschweißung, bei welcher sämtliche Komponenten gleichzeitig erwärmt und aufgeschmolzen werden, als nachteilig erscheinen. Der Vorteil der erfindungsgemäßen Vorrichtung und des entsprechenden Herstellungsverfahrens liegt in der universellen Verwendbarkeit des mit zwei Schweißspiegeln oder zwei Schweißspiegelkomponenten versehenen und konfigurierbaren Schweißmoduls, dessen prozessökonomische Vorteile sich insbesondere bei zunehmender Komplexität des zu fertigenden Fenster- oder Türrahmens voll zur Geltung kommt.

Nach einer Weiterbildung der Erfindung ist vorgesehen, dass die beiden, der erste und der zweite Schweißspiegel des Schweißmoduls Y-artig zueinander in der Vorrichtung bzw. dem Schweißmodul angeordnet, bzw. daran ausgerichtet sind. Dabei betrifft diese Y-artige Anordnung bzw. Ausrichtung der beiden Heizelemente oder Schweißspiegel deren Betriebsstellung in der Aufspannebene, in welcher die miteinander zu verbindenden Profilteile liegen. Die Ausrichtung des ersten, plattenartig ausgebildeten Schweißspiegels ist dergestalt, dass dieser mit seiner schmalen Seitenfläche fluchtend zur Spitze des zweiten V-förmigen Schweißspiegels zu liegen kommt. Der erste, plattenartige Schweißspiegel befindet sich dabei in Höhe der nach außen gerichteten Spitze, des zweiten, V-förmigen Schweißspiegels.

Ferner ist vorgesehen, dass lediglich entweder der eine oder der andere, das heißt der erste oder der zweite Schweißspiegel mit den zu verschweißenden Profilteilen in Anlagestellung tritt. Folglich ist die Vorrichtung bzw. das Schweißmodul derart ausgestaltet, dass die beiden, ersten und zweiten Schweißspiegel wechselseitig in die für die Profilteile vorgesehene Aufspannebene einfahrbar sind. Alternativ kann vorgesehen werden, auch beide, den plattenartig ausgebildeten und den V-förmig ausgestalteten Schweißspiegel gleichzeitig in die Profilebene einzufahren, in diese abzusenken oder in diese anzuheben.

Ferner ist vorgesehen, den ersten, plattenartigen Schweißspiegel zum stirnseitigen Verschweißen zweier Profilteile vorzusehen, welche ein sich im Wesentlichen geradlinig erstreckendes Rahmenteil bilden. Die mittels des ersten Schweißspiegel zu einem Rahmenteil zu verbindenden Profilteile weisen an ihrem einander zugewandten Endabschnitt eine im Wesentlichen senkrecht zu ihrer Längserstreckung verlaufende Stirnfläche auf. Dabei bildet diese ebene Stirnfläche jedoch nur einen Teilbereich des gesamten Querschnittsprofils. Die ebene Stirnfläche mündet seitlich in einen abgeschrägten Randbereich. Dieser abgeschrägte Bereich ist an beiden miteinander zu verbindenden Profilteilen quasi symmetrisch vorhanden, sodass nach einem Zusammenfügen dieser beiden Profilteile das Rahmenteil angrenzend an die Fügenaht eine V-förmige Einkerbung aufweist.

Nach einer weiteren Ausgestaltung der Erfindung ist vorgesehen, dass ein in einem ersten Schweißzyklus aus zwei unterschiedlichen Profilteilen zusammengesetztes Rahmenteil mit einer V-förmigen Einkerbung mit dem zweiten V-förmig ausgebildeten Schweißspiegel zum Aufschmelzen im Bereich der V-förmigen Ausnehmung in Anlagestellung bringbar ist. Dabei sind die außenliegenden Heizflächen des V-förmigen Schweißspiegels mit den Seitenflanken der Einkerbung des Rahmenteils in Anlagestellung bringbar, während die innenliegenden Heizflächen des V-förmigen Heizspiegels zum Erwärmen und Abschmelzen eines Querholms mit entsprechendem spitzen Zuschnitt vorgesehen ist. Dieses Aufheizen bzw. Abschmelzen kann unmittelbar nach dem Zusammenfügen der beiden, das Rahmenteil bildenden Profilteile erfolgen. Es muss dabei nicht zugewartet werden, bis die im Wesentlichen geradlinige Füge- oder Schweißnaht der beiden das Rahmenteil bildenden Profilteile abgekühlt oder ausgehärtet ist. Vielmehr kann der zweite Schweißzyklus während des Abkühlens der ersten Schweißnaht erfolgen. Dies ist prozessökonomisch besonders günstig, da die beiden sequenziell ablaufenden Schweißprozesse somit zeitlich überlappen.

Nach einer Weiterbildung der Erfindung ist vorgesehen, dass die Schweißvorrichtung zumindest zwei Schweißmodule mit jeweils einem ersten und einem zweiten Schweißspiegel aufweist. Mittels zweier solcher zweikomponentigen Schweißmodule ist in einem ersten Schweißzyklus die Herstellung zweier aus jeweils zwei Profilteilen gebildeten Rahmenteilen vorgesehen, welche dann in einem nachgeschalteten zweiten Schweißzyklus jeweils mit ihrer V-förmigen Einkerbung über ein mit einem entsprechenden Zuschnitt versehenen Querholm verschweißt werden. Dies ermöglicht insbesondere die Herstellung H-artig ausgebildeter Rahmenkomponenten in lediglich zwei Schweißzyklen welche mittels einer automatisierten, mit Zustell- und Verfahreinrichtungen ausgestalteten Vorrichtung selbsttätig und nahezu vollautomatisch hergestellt werden können.

Nach einer besonders vorteilhaften Weiterbildung der Erfindung können derartig H-artige Rahmenkomponenten nahezu beliebig mit weiteren Profilteilen verschweißt werden. Da die beiden Längsabschnitte der H-artigen Rahmenkomponente über den Querholm miteinander verbunden sind und somit die freien Enden der beiden länglichen Rahmenteile der H-artigen Rahmenkomponente unbeweglich zueinander sind, kann je nach Ausgestaltung der freien Enden der H-artigen Rahmenkomponente zumindest ein Schweißmodul der erfindungsgemäßen Vorrichtung zum Anschweißen weiterer Profilteile Verwendung finden. Entsprechend der Ausgestaltung insbesondere des Zuschnitts des freien Endes der H-artigen Rahmenkomponente ist das vorgesehene Schweißmodul gegebenenfalls zu konfigurieren.

Nach einem weiteren unabhängigen Aspekt betrifft die Erfindung ein Verfahren zum Verbinden oder Verschweißen von Kunststoff-Profilteilen eines Fenster- oder Türrahmens, welcher zumindest zwei durch einen Querholm oder durch einen Steg voneinander getrennte Öffnungen für gegensinnig zu öffnende Flügel des Fensters oder der Tür aufweist. So ist zur Erzeugung einer Eckverbindung, welche eine Y-artige Schweißnaht aufweist und in welcher drei einzelne Profilteile miteinander verschweißt werden ein mehrkomponentiges konfigurierbares Schweißmodul vorgesehen. In einer ersten Konfiguration des Schweißmoduls werden zwei Profilteile unterschiedlichen Querschnitts zur Bildung eines längserstreckten Rahmenteils an ihren Stirnseiten zumindest bereichsweise miteinander verbunden. Anschließend wird mit einer zweiten Konfiguration des Schweißmoduls ein Querholm mit wenigstens einem seiner zumindest bereichsweise spitz zulaufenden freien Endabschnitte angrenzend an den Stoßbereich der beiden Profilteile mit dem Rahmenteil verbunden, wodurch eine Y-artige Schweißverbindung zwischen drei Profilteilen in einem zweistufigen sequentiell ablaufenden Prozess erzeugt wird und zunächst zwei der drei Profilteile zur Bildung eines längs erstreckten Rahmenteils verbunden werden.

Das erfindungsgemäße Verfahren zeichnet sich dabei durch ein zweistufiges sequenziell ablaufendes Schweißverfahren aus, wobei in den unterschiedlichen Schweißzyklen unterschiedlich ausgestaltete Schweißspiegel eines Schweißmoduls zum Einsatz kommen. In jedem Schweißzyklus werden jeweils zwei Profilteile bzw. Rahmenteile miteinander verbunden. Die unterschiedliche Ausgestaltung der einzelnen Schweißspiegel des Schweißmoduls ermöglicht ein sequenzielles Erwärmen und Aufschmelzen einzelner Profilteile und Rahmenteile zur Bildung einer Y-artigen Schweißverbindung, bei welcher jedes der miteinander zu verbindenden Teile jeweils mit beiden anderen Profilteilen zur Anlage gelangt.

Es ist dabei nach einer Weiterbildung der Erfindung vorgesehen, dass das Schweißmodul in seiner ersten Konfiguration, während des ersten Schweißzyklus einen im Wesentlichen plattenartig ausgestalteten Schweißspiegel oder ein dergleichen ausgestaltetes Heizelement oder eine entsprechend geartete Heizplatte aufweist, welche zum Verschweißen oder Zusammenfügen von zumindest bereichsweise eben ausgestalteten Stirnseiten zweier Profilteile geeignet ist. In seiner zweiten Konfiguration weist das Schweißmodul einen im Wesentlichen V-förmigen Schweißspiegel auf. Die Außenseiten der beiden Heizflächen des V-förmigen Schweißspiegels gelangen mit einer V-artig ausgestalteten Ausnehmung bzw. Einkerbung eines zumindest zwei Profilteile unterschiedlichen Querschnitts aufweisenden Rahmenteils zur Anlage. Die Innenseiten des V-artigen Heizspiegels dienen der Erwärmung und dem Abschmelzen einer Querholms mit einem korrespondierend ausgebildeten V-förmigen Zuschnitts.

Nach einer besonders vorteilhaften Ausgestaltung der Erfindung ist vorgesehen, dass der zweite, V-förmige Schweißspiegel unmittelbar nach einem Zusammenfügen der stirnseitig zumindest bereichsweise abgeschmolzenen Profilteile mit diesen und dem Querholm in Anlagestellung tritt. Das heißt, der zweite Schweißzyklus zum Verbinden des Rahmenteils mit dem Querholm beginnt bereits bevor die beiden mittels des ersten Schweißzyklus miteinander verbundenen Profilteile fest miteinander verbunden und im Bereich der Schweißung ausgehärtet bzw. abgekühlt sind.

Es ist insbesondere vorgesehen, während des Aushärtens bzw. Abkühlens der beiden stirnseitig und in Längsrichtung zusammengefügten Profilteile den zweiten Schweißzyklus durch Aufschmelzen der V-förmigen Kerbe im Fügebereich der beiden Profilteile zu beginnen. Diese im Wesentlichen sequenziell ablaufenden Schweißzyklen überlappen zeitlich. Dies trägt zur Verkürzung der Fertigungszeit maßgeblich bei.

Obschon die Erfindung zwei sequentiell ablaufende Schweißzyklen unter Verwendung unterschiedlicher Konfigurationen des Schweißmoduls betrifft, ist zwischen den einzelnen Schweißzyklen ein Eingreifen des Anwenders nicht erforderlich. Die Vorrichtung ist mit vorzugsweise pneumatischen oder hydraulischen Spanneinreichungen oder Spannmitteln ausgestattet, die in der Aufspannebene für die Profilteile verfahrbar und drehbar sind. Die mit einer entsprechenden Steuerung versehene Vorrichtung, ist nach entsprechender Programmierung in der Lage, die beiden sequentiell ablaufenden Schweißzyklen vollautomatisch und selbsttätig, ohne weitere Interaktion mit einem Anwender durchzuführen.

Das erfindungsgemäße Schweißverfahren und die zugehörige Vorrichtung ermöglichen zudem die Verwendung einer geringen und überschaubaren Anzahl unterschiedlich vorkonfektionierter Profilstücke. Demgemäß ist es im Rahmen der Erfindung, dass zur Bildung der Rahmenteile stets gleich geartete Profilteile Verwendung finden. Diese weisen einen Ends entweder einen Gehrungszuschnitt oder einen beidseitig spitz zulaufenden Zuschnitt auf. Andern Ends weisen diese Profilteile im Querschnitt eine im Wesentlichen ebene und senkrecht zur Profillängsrichtung orientierte Stirnfläche und einen seitlich an die Stirnfläche angrenzenden und zur Seite des Profils verlaufenden abgeschrägten Abschnitt auf.

Zur Bildung eines Rahmenteils werden zumindest zwei solcher Profilteile mit ihren ebenen Stirnflächen im ersten Schweißzyklus miteinander verschweißt, so dass der an die ebene Stirnfläche angrenzende schräge Endabschnitt der beiden Profilteile eine V-förmige Ausnehmung des Rahmenteils bildet, in welcher der spitz zulaufende Steg oder Querholm eingesetzt und mit dem Rahmenteil nachfolgend verschweißt werden kann.

Sowohl die im Wesentlichen senkrecht zum Querholm oder Quersteg verlaufenden Rahmenteile als auch die parallel zum Querholm verlaufenden Rahmenteile sind sämtlich aus gleich gearteten Profilteilen gebildet. Im Unterschied zu Fertigungsverfahren nach dem Stand der Technik, bei welchen auf eine Vielzahl unterschiedlicher vorkonfektionierter Profilteile zurückgegriffen werden muss, ermöglicht die Erfindung einer Verringerung der Anzahl unterschiedlich ausgestalteter Profilteile. Dies ist hinsichtlich der Vorkonfektionierung einzelner Profilteilzuschnitte und hinsichtlich der Logistik im Rahmen der schweißtechnischen Verarbeitung der Profilteile von Vorteil.

Nach einer Weiterbildung der Erfindung ist vorgesehen, dass der Querholm mit seinen beiden freien Endabschnitten mit jeweils einem Rahmenteil, welches eine V-förmige Kerbe oder Ausnehmung aufweist, zur Bildung einer H-artigen Rahmenkomponente verbunden wird. Das Verbinden beider freier Endabschnitte des Querholms oder eines Querstegs erfolgt vorzugsweise mittels zweier im Wesentlichen identisch ausgebildeter und symmetrisch zueinander angeordneter Schweißmodule, welche in einem Abstand zueinander an der Schweißvorrichtung angeordnet sind, der im Wesentlichen der Längserstreckung des Querholms oder des Querstegs entspricht.

Nach einer besonders vorteilhaften Ausgestaltung der Erfindung ist vorgesehen, die freien Enden der im ersten Schweißzyklus zusammengefügten Rahmenteile und/oder der mittels ersten und zweiten Schweißzyklus zusammengefügten H-artigen Rahmenkomponenten mit einem weiteren Profilteil und/oder mit einem weiteren Rahmenteil zu verbinden. Für diese weitere Verbindung kann in vorteilhafter Weise das erfindungsgemäße Schweißmodul entweder in seiner ersten oder in seiner zweiten Konfiguration weiter verwendet werden.

Ist beispielsweise ein freier Endabschnitt der H-artigen Rahmenkomponente spitz zulaufend ausgebildet und/oder ist der in gleicher Höhe zu liegen kommender freie Endabschnitt des anderen Rahmenteils der Rahmenkomponente mit einer Gehrung versehen, so können die beiden zuvor verwendeten Schweißmodule, insbesondere ausschließlich der zweite Schweißspiegel, zum Aufschmelzen bzw. Aufheizen oder Erwärmen beider freier Endabschnitte der H-artigen Rahmenkomponente Verwendung finden. In einem dritten Schweißzyklus können dann die beiden Endabschnitte der H-artig ausgestalteten Rahmenkomponente mit einem geeigneten Profilteil oder einer weiteren Rahmenkomponente verschweißt werden.

Dabei ist insbesondere vorgesehen, dass das weitere, mit der H-artig ausgestalteten Rahmenkomponente zu verbindende Profilteil selbst als Rahmenteil ausgebildet ist, welches eine Vielzahl, zumindest aber zwei Abschnitte unterschiedlicher Querschnittsgeometrie aufweist und welches beispielsweise im Zuge eines ersten Schweißzyklus aus einzelnen Profilteilen zusammengeschweißt werden kann.

So ist insbesondere vorgesehen, dass in einem ersten Arbeitsgang bzw. einem ersten Schweißzyklus unter Verwendung des Schweißmoduls in seiner ersten Konfiguration, das heißt unter Verwendung des ersten plattenartig ausgestalteten Schweißspiegels, einzelne Profilteile an ihren einander zugewandten Stirnseiten zu länglichen Rahmenteilen verschweißt werden. Dabei weisen diese Rahmenteile im Bereich der einzelnen Schweißnähte V-förmige Einkerbungen zur Aufnahme von Querstegen bzw. Querholmen auf. Diese werden in einem zweiten Arbeitsgang oder einem zweiten Schweißzyklus unter Verwendung des Schweißmoduls in seiner zweiten Konfiguration, das heißt unter Verwendung des V-artig ausgebildeten Schweißspiegel in die zuvor gefertigten Rahmenteile eingesetzt und/oder damit verbunden. In einem dritten Arbeitsgang bzw. Schweißzyklus ist vorgesehen, vorkonfektionierte Rahmenkomponenten entweder mit Profilteilen und/oder mit ebenfalls vorkonfektionierten Rahmenteilen zum Endprodukt, nämlich zu einem Fenster- oder Türrahmen zu verschweißen.

Ferner ist vorgesehen, dass sämtliche Profilteile, Rahmenteile und Rahmenkomponenten bei sämtlichen Schweißvorgängen entweder entlang ihrer Längsausrichtung oder senkrecht hierzu aufeinander zu bewegt werden. Derartige Verstell- und Verfahrmechanismen verringern in vorteilhafter Weise die Anforderungen an Verstell- und Verfahreinrichtungen mittels welcher die miteinander zu verbindenden Profilteile in der Aufspannebene zu verfahren bzw. aneinanderzufügen sind.

Die durchgängig verwendeten Begriffe Querholm bzw. Quersteg sind als Synonym für die im Fenster- oder Türbau üblichen Begriffe Kämpfer oder Pfosten zu verstehen. Vorliegend werden mit Querholm oder Quersteg ganz allgemein Verbindungsteile bezeichnet, die zumindest zwei senkrecht zu ihrer Längserstreckung voneinander beabstandete Profil- oder Rahmenteile eines Fenster- oder Türrahmens miteinander verbinden. Der Querholm oder Quersteg kann im Einbauzustand eines Fensters oder einer Tür sowohl horizontal als auch vertikal oder gar schräg ausgerichtet sein.

Ausführungsbeispiele

Weitere Ziele, Merkmale sowie vorteilhafte Anwendungsmöglichkeiten der vorliegenden Erfindung werden unter Bezugnahme auf die beiliegenden Figuren im Nachfolgenden anhand der Ausführungsbeispiele beschrieben.

### Es zeigen:

- Fig. 1: eine schematische Darstellung von insgesamt fünf miteinander zu verbindenden Profilteilen,
- Fig. 2: eine der Figur 1 entsprechende Darstellung nach vollzogenem ersten Schweißzyklus,
- Fig. 3: eine weitere Ausführung einer fünfkomponentigen H-artig ausgestalteten Rahmenkomponente,
- Fig. 4: die Rahmenkomponente gemäß Figur 3 sowie drei weitere damit zu verbindende Profilteile,
- Fig. 5: zwei H-artig ausgestaltete und mittels dreier Profilteile zu verbindende Rahmenkomponenten,
- Fig. 6: die Rahmenkomponenten gemäß Figur 5 nach erfolgtem dritten Schweißzyklus und vor Fertigstellung eines Fensterrahmens,
- Fig. 7: eine perspektivische schematische Darstellung des Schweißmoduls in seiner ersten Konfiguration und
- Fig. 8: eine entsprechende perspektivische Darstellung des Schweißmoduls in seiner zweiten Konfiguration.

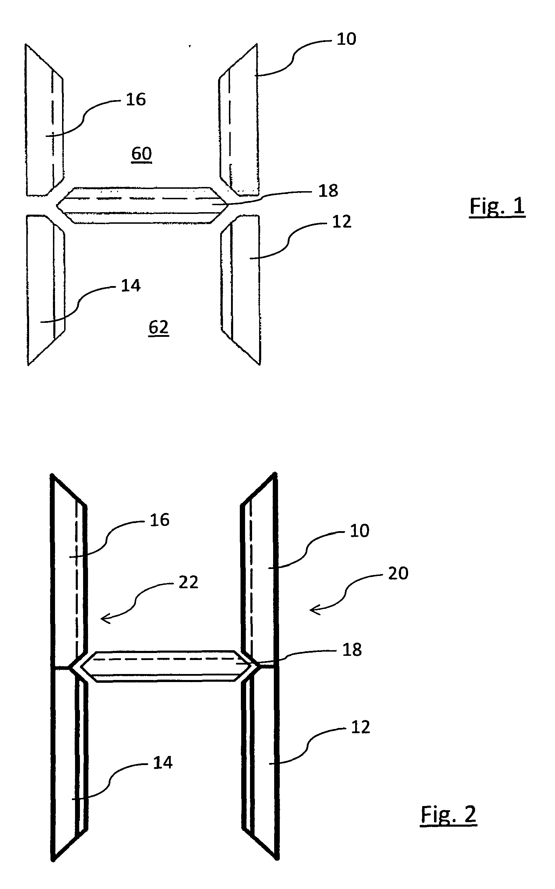

In Figur 1 sind insgesamt vier Profilteile 10, 12, 14, 16 und ein als Querholm bzw. Quersteg 18 ausgebildetes Profilteil gezeigt. Die beiden oben liegenden Profilteile 10, 16 und der obere Abschnitt des Querholms 18, welcher strichliniert dargestellt ist, bilden drei Begrenzungen einer Öffnung 60 für einen Fenster- oder Türflügel. Entsprechend umgrenzen die unten liegenden Profilteile 12, 14 und der unten liegende durchgezogene Abschnitt des Querholms 18 eine untere Öffnung 62.

Die beiden Öffnungen 60 und 62 sind für gegensinnig zu öffnende Fenster- oder Türflügel vorgesehen. Das heißt, während beispielsweise der im Bereich der Öffnung 60 anzuordnende Fensterflügel nach außen geöffnet wird, ist der im Bereich der Öffnung 62 anzuordnende Fensterflügel nach innen zu öffnen. Dieser gegensinnigen Öffnungen 60, 62 erfordern, dass die die Öffnungen begrenzenden Profilabschnitte 10, 12, 14, 16 ein jeweils an die Öffnungsrichtung angepasstes Querschnittsprofil aufweisen. Die unterschiedlichen Querschnittsprofile einzelner Profilteile 10, 12, 14, 16 sind in den Figuren durchgängig durch durchgezogene bzw. gestrichelte Linien an den Seitenrändern der Profilteile gekennzeichnet.

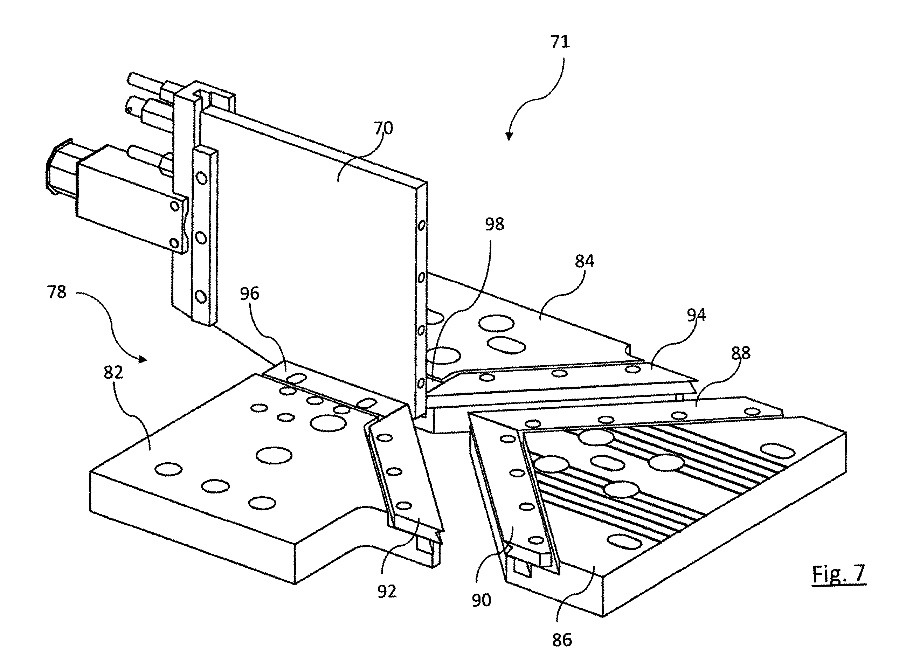

Zur Herstellung eines Fensterrahmens für gegensinnig zu öffnende Fensterflügel ist es erforderlich, sämtliche schemenhaft in Figur 1 gezeigt Profilteile 10, 12, 14, 16 paarweise miteinander und über einen Quersteg oder Querholm 18 zu verbinden. Nach dem erfindungsgemäßen Verfahren unter Verwendung der erfindungsgemäßen Vorrichtung erfolgt das Verbinden der in Figur 1 gezeigten Profilteile 10, 12, 14, 16, 18 in zwei Schritten. In einem ersten Schritt werden mittels des ersten Heizspiegels 70, wie er beispielsweise in Figur 7 dargestellt ist, die beiden Profilteile 10 und 12 sowie die beiden Profilteile 14 und 16 paarweise miteinander verbunden, indem sie im Bereich ihrer abgeflachten Stirnseite mittels des Schweißspiegels 70 aufgeheizt und bereichsweise abgeschmolzen werden.

Nach erfolgtem Auf- oder Abschmelzen der Stirnseiten der Profilteile 10, 12 sowie 14 und 16 wird der Heizspiegel 70 außer Anlagestellung gebracht und die Profilteile 10 und 12 sowie 14 und 16 werden paarweise in Längsrichtung aufeinander zu bewegt. Dabei kommen ihre einander zugewandten Begrenzungsflächen, welche nunmehr die Schweißnaht bilden, etwa in Höhe der seitlichen Spitzen des Querholms 18 zu liegen.

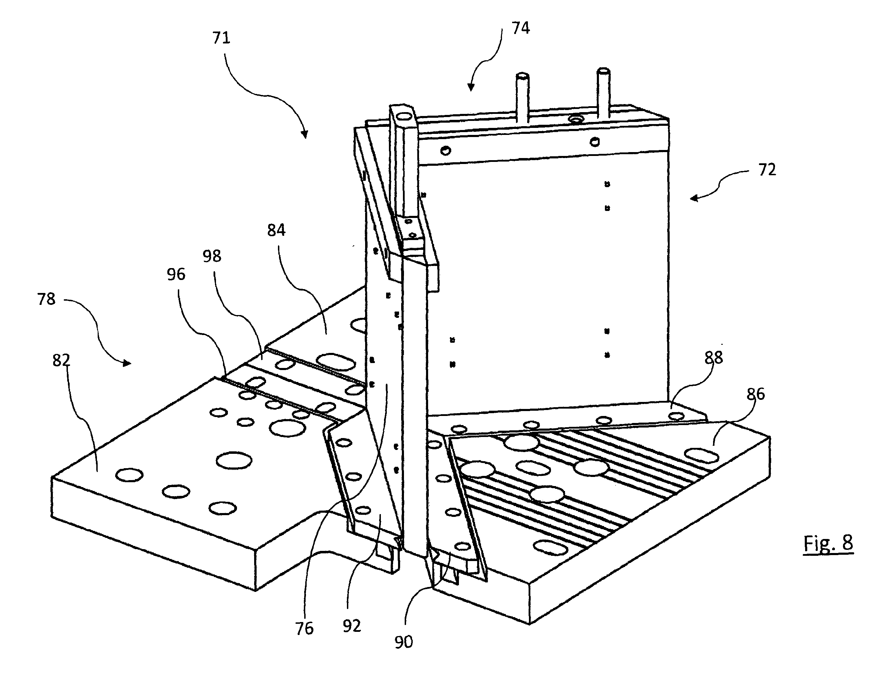

Im Zuge des in Figur 2 angedeuteten ersten Schweißzyklus werden die Profilteile 10 und 12 zu einem Rahmenteil 20 verbunden und die Profilteile 14 und 16 zu einem Rahmenteil 22 verbunden. Nach diesem ersten Schweißzyklus bzw. unmittelbar nach dem Zusammenfügen der die beiden Rahmenteile 20, 22 bildenden Profilteile 10, 12 sowie 14 und 16 wird die V-förmige Einkerbung im Fügebereich der beiden Profilteile 10 und 12 bzw. 14 und 16 mittels des zweiten V-förmig ausgestalteten Schweißspiegels 72, wie er beispielsweise in Figur 8 perspektivisch dargestellt ist, auf- bzw. angeschmolzen.

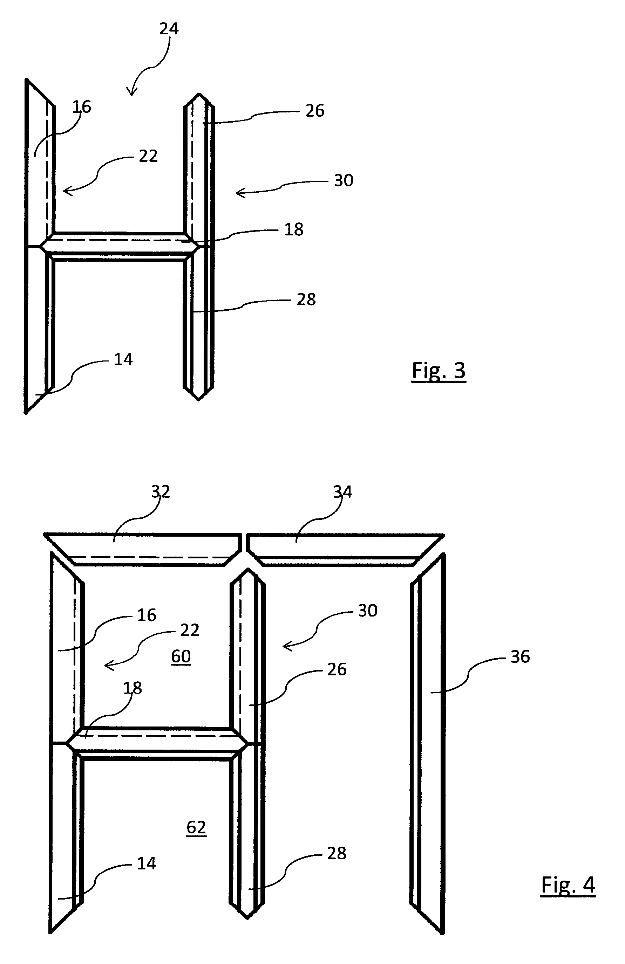

Hiernach werden die beiden Rahmenteile 20, 22 gegenüber dem Querholm 18 in der Darstellung gemäß der Figur 2 horizontal aufeinander zu bewegt, sodass letztlich eine der Darstellung gemäß Figur 3 ähnelnde H-artig ausgebildete Rahmenkomponente 24 entsteht. Diese in Figur 3 beispielhaft gezeigte Rahmenkomponente 24 weicht hinsichtlich der Ausgestaltung der freien Endabschnitte der Profilteile 26, 28 von den Profilteilen 10 und 12 gemäß Figur 2 ab. Im Unterschied zur Konfiguration gemäß Figur 2 weist die H-artig ausgebildete Rahmenkomponente 24 einen länglichen linksseitigen Rahmenteil 22 und einen rechts liegenden Rahmenteil 30 auf, wobei beide Rahmenteile 22 und 30 jeweils durch Verschweißen zweier Profilteile 14, 16 sowie 26, 28 mit jeweils unterschiedlichen Querschnittsprofilen gebildet werden.

In Figur 4 ist die weitere Verarbeitung der in Figur 3 dargestellten H-artigen vorkonfektionierten Rahmenkomponente 24 angedeutet. So ist vorgesehen, am oberen Endabschnitt der beiden Rahmenteile 22, 30 der Rahmenkomponente 24 ein Profilteil 32 anzuschweißen und fluchtend zu diesem Profilteil 32 ein weiteres Profilteil 34 vorzusehen. Das Zusammenfügen der in Figur 4 insgesamt vier gezeigten Komponenten 24, 32, 34, 36 erfolgt nach dem erfindungsgemäßen Verfahren abermals zweistufig. In einem ersten Schweißzyklus werden ausschließlich die beiden Profilteile 32, 34 unter Zuhilfenahme des ersten Schweißspiegels 70 miteinander verbunden. Während in einem nachgeschalteten zweiten Schweißzyklus die zu einem Rahmenteil verbundenen Profilteile 32, 34 mit den beiden freien Endabschnitten der Rahmenkomponente 24 und mit einem weiteren Profilteil 36 verschweißt werden.

Zwischen den Profilteilen 32, 34 und 26 wird eine Y-artige Verschweißung bzw. Y-artige Schweißnaht gebildet. Dies erfolgt, wie auch zuvor anhand der Figuren 1 bis 3 erläutert, in einem zweistufigen, sequenziell ablaufenden Schweißverfahren. Zunächst werden die beiden Profilteile 32, 34 horizontal miteinander verschweißt und anschließend unter Zuhilfenahme des zweiten, V-förmig ausgebildeten Schweißspiegels 72 mit dem Profilteil 26 verbunden. Die zum Zusammenfügen sämtlicher vier Komponenten 24, 32, 34, 36 vorgesehene Schweißvorrichtung weist insgesamt drei Schweißmodule oder Schweißköpfe auf. Die beiden seitlichen Verschweißungen, welche das Profilteil 32 und das Profilteil 16 bzw. das Profilteil 34 und das Profilteil 36 miteinander verbinden, können als Stumpfschweißköpfe in einer um 45° gedrehte Ausrichtung ausgebildet sein, während zur Verbindung der drei Profilteile 32, 34, 26 das erfindungsgemäße zweikomponentige Schweißmodul vorzusehen ist.

Alternativ oder ergänzend ist auch denkbar, für die beiden außenliegenden Verschweißungen, einen V-artig ausgebildeten Schweißspiegel 72, wie in Figur 8 dargestellt, zu verwenden.

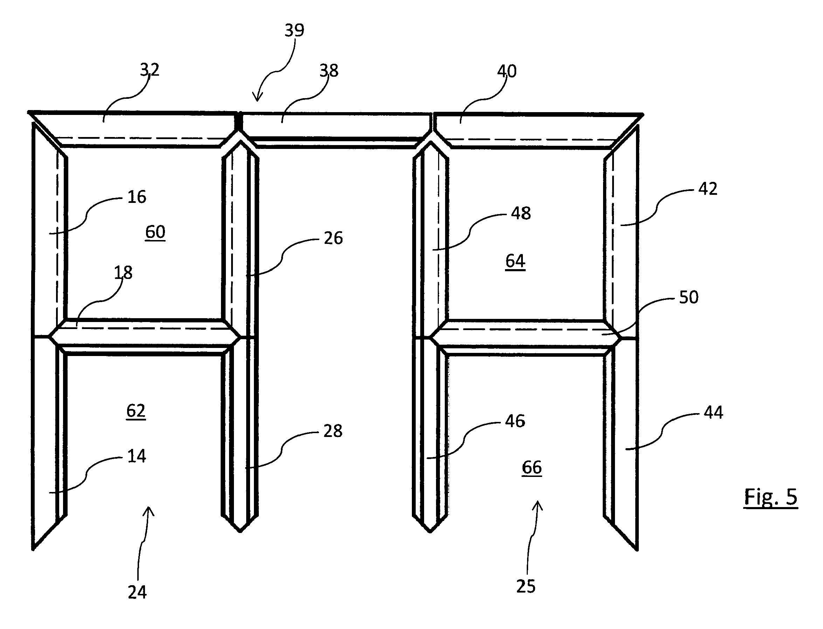

In Figur 5 ist eine Weiterbildung einer Fensterrahmenkonstruktion gezeigt, die zwei H-artige Rahmenkomponenten 24, 25 aufweist, welche mittels eines insgesamt drei Profilteile 32, 38, 40 aufweisenden Rahmenteils 39 in Horizontalrichtung miteinander zu verbinden sind. Die H-artig ausgebildete Rahmenkomponente 25 ist symmetrisch zur Rahmenkomponente 24 ausgebildet und weist zwei weitere für gegensinnig zu öffnende Flügel vorgesehene Öffnungen 64 und 66 auf. Auch diese H-artige Rahmenkomponente hat insgesamt vier Profilteile 42, 44, 46, 48, welche ebenfalls nach dem zuvor beschriebenen zweistufigen Schweißprozess über einen horizontal verlaufenden Querholm 50 starr miteinander verbunden sind.

Das Zusammenfügen der Rahmenkomponenten 24, 25 erfolgt vorzugweise mittels zweier symmetrisch zueinander angeordneter Schweißmodule oder Schweißköpfe, die jeweils einen ersten und einen zweiten Heizspiegel 70, 72 zur Schaffung einer Y-artigen Schweißverbindung aufweisen. Diese beiden Schweißmodule können in dem nun nachgeschalteten Schweißvorgang zur Bildung eines sich in Horizontalrichtung länglich erstreckenden Rahmenteils 39 Verwendung finden. Dabei wird das innenliegende Profilteil beidseitig mit einem ersten Heizspiegel 70 in Anlagestellung gebracht, wobei auf der jeweils anderen Seite des Heizspiegels die dem Profilteil 38 zugewandten Endabschnitte der Profilteile 32 und 40 zur Anlage gelangen. Nachdem die Stirnseiten dieser Profilteile 32, 38, 40 auf ein erforderliches Maß aufgeheizt wurden, werden die beiden plattenartig ausgebildeten Heizspiegel 70 außer Anlagestellung gebracht und die beiden außenliegenden Profilteile 40, 32 werden nach innen zum vorzugsweise ortsfest angeordneten Profilteil 38 hin bewegt, damit ein sich in Horizontalrichtung erstreckendes durchgehendes Rahmenteil 39 zur Verfügung gestellt werden kann. Dieses im ersten Schweißzyklus erzeugte Rahmenteil 39 kommt unmittelbar nach der ersten Schweißung mit seinen V-förmigen Ausschnitten fluchtend zu den obenliegenden Endabschnitten der spitz zulaufenden Profilteile 26, 48 der H-artig ausgebildeten Rahmenkomponenten 24, 25 zu liegen.

In einem nachgeschalteten Schweißvorgang sind nunmehr insgesamt vier einzelne Schweißmodule vorgesehen, von denen die mittleren beiden einen zweiten, V-förmigen Schweißspiegel 72 zum Aufheizen und Abschmelzen des V-förmigen Ausschnitts des Rahmenteils 39 und des jeweils gegenüberliegenden freien, spitz zulaufenden Endabschnitts der Profilteile 26, 48 aufweisen. Zudem ist an den beiden seitlichen Endabschnitten des Rahmenteils 39 ein um 45° gedrehter plattenartiger Schweißspiegel vorgesehen, der ein An- oder Abschmelzen der nach Art einer Gehrung ausgebildeten freien Enden des Rahmenteils 39 und der beiden Profilteile 16, 42 zur Verfügung stellt. Letztlich können die beiden vorkonfektionierten H-artig ausgebildeten Rahmenkomponenten 24, 25 in einem zweistufigen Schweißverfahren über die drei untereinander verbundenen Profilteile 32, 38, 40 miteinander verschweißt werden.

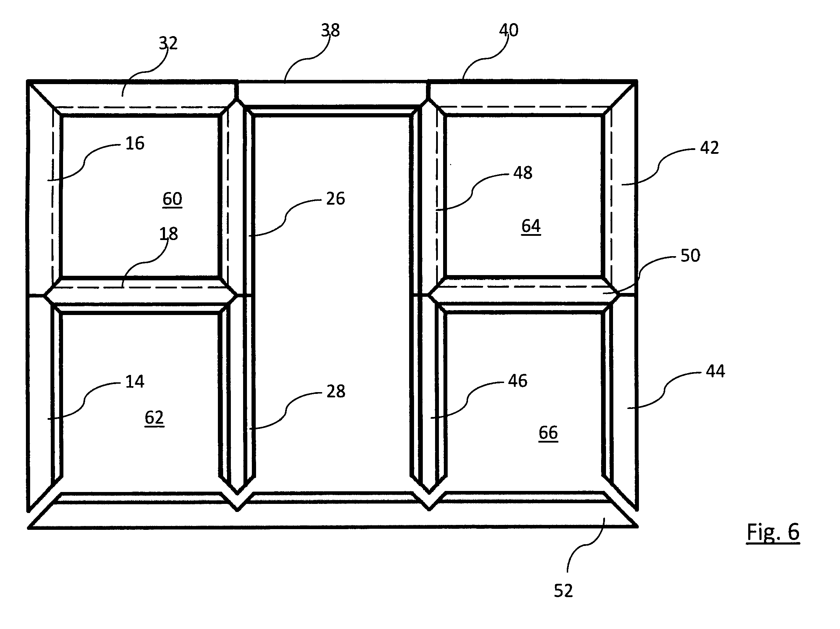

In einem letzten Schweißprozess, wie er in Figur 6 angedeutet ist, können dieselben vier Schweißköpfe, wie sie zuvor verwendet wurden, zum Verschweißen eines unten liegenden, sich in Horizontalrichtung erstreckenden Profilteils 52 mit den beiden Rahmenkomponenten 24, 25 universell Verwendung finden.

Figur 7 zeigt schließlich in einer perspektivischen Darstellung die erste Konfiguration des Schweißmoduls 71, bei welcher der plattenartig ausgestaltete Schweißspiegel 70 zwischen den beiden Profilträgern 82, 84 und den daran angeordneten Begrenzungsmessern 96, 98 zu liegen kommt. Die beiden in der Darstellung gemäß Figur 7 nicht gezeigten Profilteile gelangen stirnseitig mit dem Schweißspiegel 70 zur Anlage. Sie sind dabei an dem jeweiligen Profilträger 82, 84 in der von den Profilträgern 82, 84, 86 gebildeten Aufspannebene 78 lösbar angeordnet.

Nachdem die beiden an den Profilträgern 82, 84 angeordneten Profilteile mittels des Schweißspiegels 70 stirnseitig erwärmt und bereichsweise ab- oder angeschmolzen sind, werden die beiden Profilträger 82, 84 zumindest geringfügig auseinander gefahren, damit der Schweißspiegel in eine Nicht-Anlagestellung, vorzugsweise nach oben oder nach unten bewegt werden kann. Sodann werden die beiden Profilträger 82, 84 aufeinander zu bewegt, damit die beiden daran angeordneten Profilteile miteinander verschweißt werden können.

Während des Abkühlens der beiden aufgeschmolzenen Abschnitte der an den Profilträgern 82, 84 angeordneten Profilteile fährt der in Figur 8 gezeigte V-artig ausgebildete Heizspiegel 72 in eine Anlagestellung mit einem zwischen den beiden Profilteilen gebildeten V-förmigen Ausschnitt. Dabei oder unmittelbar danach wird auch ein Quersteg oder Querholm, welcher auf dem Profilträger 86 angeordnet ist, mit der Innenseite des Schweißspiegels 72 in Anlagestellung gebracht. Die außenseitigen Heizflächen 76, 74 des Schweißspiegels 72 gelangen mit dem in Figur 8 nicht explizit dargestellten V-artigen Ausschnitt oder V-artigen Einkerbung eines Rahmenteils in Anlage. Dieses mittels des zweiten Schweißspiegels 72 erfolgende Aufheizen und Ab- bzw. Anschmelzen kann insbesondere noch während des Abkühlens einer mittels des ersten Schweißspiegel 70 geschaffenen Verschweißung erfolgen.

Nachdem auch im zweiten Schweißzyklus eine ausreichende Erwärmung der miteinander zu verbindenden Profilteile erfolgt ist, wird der zweite Schweißspiegel 72 gleichermaßen außer Anlagestellung gebracht. Auch dieser kann nach unten in eine abgesenkte oder nach oben in angehobener Stellung verfahren werden. Hiernach erfolgt eine Zustellung des Profilträgers 86 mit den daran angeordneten Begrenzungsmessern 88, 90 in Richtung zu dem jeweils am Profilträger 82 angeordneten Begrenzungsmesser 92 und zu dem am Profilträger 84 angeordneten Begrenzungsmesser 94, wobei letztlich die Y-artige Verschweißung sämtlicher drei Profilteile gebildet werden kann.

Bezugszeichenliste

| | | | |
|---|---|---|---|
| 10 | Profilteil | 50 | Querholm |
| 12 | Profilteil | 52 | Rahmenteil |
| 14 | Profilteil | 60 | Fensteröffnung |
| 16 | Profilteil | 62 | Fensteröffnung |
| 18 | Querholm | 64 | Fensteröffnung |
| 20 | Rahmenteil | 66 | Fensteröffnung |
| 22 | Rahmenteil | 70 | Schweißspiegel |
| 24 | Rahmenkomponente | 71 | Schweißmodul |
| 25 | Rahmenkomponente | 72 | Schweißspiegel |
| 26 | Profilteil | 74 | Heizfläche |
| 28 | Profilteil | 76 | Heizfläche |
| 30 | Rahmenteil | 78 | Aufspannebene |
| 32 | Profilteil | 82 | Profilträger |
| 34 | Profilteil | 84 | Profilträger |
| 36 | Profilteil | 86 | Profilträger |
| 38 | Profilteil | 88 | Begrenzungsmesser |
| 39 | Rahmenteil | 90 | Begrenzungsmesser |
| 40 | Profilteil | 92 | Begrenzungsmesser |
| 42 | Profilteil | 94 | Begrenzungsmesser |
| 44 | Profilteil | 96 | Begrenzungsmesser |
| 46 | Profilteil | 98 | Begrenzungsmesser |
| 48 | Profilteil | | |

## Patentansprüche

1. Vorrichtung zum Verbinden von Kunststoffprofilteilen (10, 12; 14, 16, 18, 26, 28, 30, 32, 34, 36, 38 , 40, 42, 44, 46, 48, 50) eines Fenster- oder Türrahmens, welcher zumindest zwei durch einen Querholm (18, 50) oder durch einen in Längsrichtung verlaufenden Steg getrennte Öffnungen (60, 62, 64, 66) für gegensinnig zu öffnende Flügel des Fensters oder der Tür aufweist, wobei der an seinen freien Enden zumindest spitz zulaufende Querholm oder Steg (18, 50) zumindest zwei Rahmenteile (20, 22) miteinander verbindet, welche jeweils zumindest zwei Profilteile (10, 12, 14, 16) unterschiedlichen Querschnittprofils aufweisen, wobei die Vorrichtung zumindest ein Schweißmodul (71) zum Anschmelzen von im Fügezustand aneinander angrenzenden Begrenzungsflächen der Profilteile (10, 12; 14, 16, 18, 26, 28, 30, 32, 34, 36, 38, 40, 42, 44, 46, 48, 50) aufweist, wobei das Schweißmodul (71) zumindest einen ersten Schweißspiegel (70) mit einer geradlinigen oder plattenartigen Kontur und zumindest einen zweiten Schweißspiegel (72) mit einer V-förmigen Kontur aufweist und wobei die beiden unterschiedlich ausgestalteten Schweißspiegel (70, 72) relativ zueinander beweglich an der Vorrichtung angeordnet sind, **dadurch gekennzeichnet, dass** der erste und zweite Schweißspiegel (70, 72) gemeinsam zur Herstellung einer Y-artigen Schweißnaht der im Fügezustand aneinandergrenzenden Begrenzungsflächen dreier Profilteile (10, 12; 14, 16, 18, 26, 28, 30, 32, 34, 36, 38, 40, 42, 44, 46, 48, 50) dienen und in einem ersten Schweißakt der erste Schweißspiegel (70) und in einem zweiten Schweißakt der zweite Schweißspiegel (72) zur Anlage an Begrenzungsflächen der Profilteile (10, 12; 14, 16, 18, 26, 28, 30, 32, 34, 36, 38, 40, 42, 44, 46, 48, 50) gelangt.

2. Vorrichtung nach Anspruch 1, wobei zumindest einer der beiden Schweißspiegel (70, 72) vertikal, horizontal und/oder schräg zur Aufspannebene (78) der Profilteile (10, 12; 14, 16, 18, 26, 28, 30, 32, 34, 36, 38, 40, 42, 44, 46, 48, 50) verstellbar angeordnet ist.

3. Vorrichtung nach einem der vorhergehenden Ansprüche, wobei der plattenartige Schweißspiegel (70) mit seiner schmalen Seite fluchtend zur Spitze des V-förmigen Schweißspiegels (72) angeordnet ist.

4. Vorrichtung nach einem der vorhergehenden Ansprüche, wobei bei einem Schweißvorgang entweder der plattenartige (70) oder der V-förmige Schweißspiegel (72) mit den zu verschweißenden Profilteilen (10, 12; 14, 16, 18, 26, 28, 30, 32, 34, 36, 38, 40, 42, 44, 46, 48, 50) in Anlagestellung tritt.

5. Vorrichtung nach einem der vorhergehenden Ansprüche, wobei der plattenartige Schweißspiegel (70) zum stirnseitigen Verschweißen zweier Profilteile (10, 12; 14, 16, 26, 28, 42, 44, 46, 48) vorgesehen ist, welche ein sich im Wesentlichen geradlinig erstreckendes Rahmenteil (20, 22, 30, 39) bilden.

6. Vorrichtung nach einem der vorhergehenden Ansprüche, wobei der V-förmige Schweißspiegel (72) dazu ausgebildet ist, mit seinen außen liegenden Heizflächen (74, 76) mit einer V-förmigen Einkerbung eines Rahmenteils (20, 22, 30, 39) in dessen Übergangsbereich zweier Profilteile(10, 12; 14, 16, 26, 28, 30, 32, 34, 36, 38, 40, 42, 44, 46, 48) in Anlagestellung zu treten.

7. Vorrichtung nach einem der vorhergehenden Ansprüche, wobei zumindest zwei Schweißmodule mit jeweils ersten und zweiten Schweißspiegeln (70, 72) vorgesehen sind, mittels derer in einem einzigen Schweißvorgang aus zwei jeweils zumindest zwei Profilteile (10, 12, 14, 16) aufweisenden Rahmenteilen (20, 22, 30) und zumindest einem Querholm (18, 50) eine Rahmenkomponente (24) zusammenfügbar ist, welche eine H-artige Kontur aufweist.

8. Vorrichtung nach einem der vorhergehenden Ansprüche, wobei das zumindest eine Schweißmodul zusammen mit einem weiteren Schweißmodul dazu ausgebildet ist, in einem einzigen Schweißvorgang die freien Enden von Rahmenteilen (20, 22, 30) der Rahmenkomponente (24) mit zumindest einem weiteren Profilteil (32, 40, 52) zu verschweißen.

9. Vorrichtung nach einem der vorhergehenden Ansprüche, wobei der zweite Schweißspiegel (72) zum Verschweißen von Rahmenteilen (20, 22, 30), Rahmenkomponenten (24, 25) und/oder Profilteilen (14, 16, 32, 34, 36, 40, 42, 44) zur Bildung eines Rahmenecks ausgebildet ist.

10. Verfahren zum Verbinden von Kunststoffprofilteilen (10, 12; 14, 16, 18, 26, 28, 30, 32, 34, 36, 38, 40, 42, 44, 46, 48, 50) eines Fenster- oder Türrahmens, welcher zumindest zwei durch einen Querholm (18, 50) oder durch einen in Längsrichtung verlaufenden Steg getrennte Öffnungen (60, 62, 64, 66) für gegensinnig zu öffnende Flügel des Fensters oder der Tür aufweist, wobei zur Erzeugung einer Eckverbindung ein mehrkomponentiges und konfigurierbares Schweißmodul (71) vorgesehen ist, wobei in einer ersten Konfiguration des Schweißmoduls (71) zumindest zwei Profilteile (10, 12; 14, 16, 18, 26, 28, 30, 32, 34, 36, 38, 40, 42, 44, 46, 48, 50) unterschiedlichen Querschnitts an ihren Stirnseiten zumindest bereichsweise miteinander verbunden werden und anschließend in einer zweiten Konfiguration des Schweißmoduls (71) ein Querholm (18, 50) mit einem seiner zumindest bereichsweise spitz zulaufenden freien Endabschnitte angrenzend an den Stoßbereich der beiden Profilteile (10, 12; 14, 16, 18, 26, 28, 30, 32, 34, 36, 38, 40, 42, 44, 46, 48, 50) mit dem Rahmenteil (20, 22, 30, 39) verbunden wird, **dadurch gekennzeichnet, dass** eine Y-artige Schweißverbindung zwischen drei Profilteilen (10, 12; 14, 16, 18, 26, 28, 30, 32, 34, 36, 38, 40, 42, 44, 46, 48, 50) in einem zweistufigen sequentiell ablaufenden Prozess erzeugt wird und zunächst zwei der drei Profilteile (10, 12; 14, 16, 18, 26, 28, 30, 32, 34, 36, 38, 40, 42, 44, 46, 48, 50) zur Bildung eines längs erstreckten Rahmenteils (20, 22, 30, 39) verbunden werden.

11. Verfahren nach Anspruch 10, wobei zur Bildung eines Rahmenteils (20, 22, 30, 39) das Schweißmodul in seiner ersten Konfiguration einen im Wesentlichen plattenartig ausgestalteten Schweißspiegel (70) und in seiner zweiten Konfiguration einen im Wesentlichen V-förmigen Schweißspiegel (72) aufweist.

12. Verfahren nach Anspruch 11, wobei der V-förmige Schweißspiegel (72) unmittelbar nach einem Zusammenfügen der stirnseitig zumindest bereichsweise abgeschmolzenen Profilteile (10, 12; 14, 16, 18, 26, 28, 30, 32, 34, 36, 38, 40, 42, 44, 46, 48, 50) mit diesen und dem Querholm (18, 50) in Anlagestellung tritt.

13. Verfahren nach einem der vorhergehenden Ansprüche 10 bis 12, wobei der Querholm (18, 50) mit seinen beiden freien Endabschnitten mit jeweils einem Rahmenteil (20, 22, 30) zur Bildung einer H-artigen Rahmenkomponente (24) verbunden wird.

14. Verfahren nach einem der vorhergehenden Ansprüche 10 bis 13, wobei das Schweißmodul (71) ferner dazu verwendet wird, die freien Enden der Rahmenteile (20, 22, 30) einer Rahmenkomponente (24) mit einem Profilteil (32, 40) und/oder mit einem weiteren Rahmenteil (39, 52) zu verbinden.

15. Verfahren nach einem der vorhergehenden Ansprüche 10 bis 14, wobei das weitere Rahmenteil (39, 52) zumindest zwei Profilteile (32, 38, 40) aufweist, welche mittels des Schweißmoduls (71) zuvor miteinander verbunden werden.

16. Verfahren nach einem der vorhergehenden Ansprüche 10 bis 15, wobei in einem ersten Arbeitsgang unter Verwendung des Schweißmoduls (71) in seiner ersten Konfiguration Profilteile(10, 12; 14, 16, 26, 28, 30, 32, 34, 36, 38, 40, 42, 44, 46, 48) zu länglichen Rahmenteilen (20, 22, 30, 39) verschweißt werden und in einem zweiten Arbeitsgang die Rahmenteile (20, 22, 30, 39) unter Verwendung des Schweißmoduls (71) in seiner zweiten Konfiguration unmittelbar miteinander und/oder zumindest mittels einem Querholm (18, 50) miteinander verbunden werden.

17. Verfahren nach einem der vorhergehenden Ansprüche 10 bis 16, wobei die zur Bildung von Rahmenteilen (20, 22, 30, 39) vorgesehenen Profilteile (10, 12; 14, 16, 26, 28, 30, 32, 34, 36, 38, 40, 42, 44, 46, 48) entlang ihrer Längserstreckung zusammengefügt werden und zum Zusammenfügen von Querholmen (18, 50) und Rahmenteilen (20, 22, 30, 39) eine Relativverschiebung von Querholmen (18, 50) und Rahmenteilen (20, 22, 30, 39) senkrecht zur Längserstreckung der Rahmenteile (20, 22, 39) oder parallel zur Längserstreckung der Querholmen (18, 50) vorgesehen ist.

18. Verfahren nach einem der vorhergehenden Ansprüche 10 bis 17, wobei das Schweißmodul (71) selbsttätig zwischen der ersten und zweiten Konfiguration umschaltet und wobei die unter den unterschiedlichen Konfigurationen des Schweißmoduls (71) durchführbaren Schweißvorgänge selbsttätig, ohne Interaktion mit einem Bediener einer Schweißvorrichtung durchgeführt werden.
